# EUROPEAN PATENT APPLICATION

(11) **EP 2 910 406 A2**
(43) Date of publication of application: **26.08.2015**
(21) Application number: 15151882.6
(22) Date of filing: 21.01.2015
(51) Int. Cl.: B60L 11/18

(54) **Controlling device for electric vehicle charger**

(30) Priority: 28.01.2014 KR 20140010533
(71) Applicant: LSIS Co., Ltd., Anyang-si, Gyeonggi-do 431-848 (KR)
(72) Inventor: Jin, Ho Sang, 431-848 Anyang-si, Gyeonggi-do (KR); Lee, Jae Ho, 431-848 Anyang-si, Gyeonggi-do (KR); Park, Chan Gi, 431-848 Anyang-si, Gyeonggi-do (KR); Park, Hong Tae, 431-848 Anyang-si, Gyeonggi-do (KR)
(74) Representative: Lang, Johannes

(57) **Abstract**

Disclosed is a charging control device for use in an electric vehicle to control an internal charging device of the electric vehicle. An auxiliary battery supplies DC power. A power supply device change a level of a voltage of the DC power to supply power. A power supply control device controls the supply of the DC power to the power supply device. A power supply device control signal generation unit transmits a charging start signal to the power supply control device in the case where a charging start condition is satisfied.

## Description

### BACKGROUND

The present disclosure relates to a charging control device for an electric vehicle.

An electric vehicle, which is driven with electric power, may be classified into a battery-powered electric vehicle and a hybrid electric vehicle. Here, the battery-powered electric vehicle is driven with electric power alone without being supplied with fossil fuels, and is generally called an electric vehicle. The hybrid electric vehicle is driven with electric power and fossil fuels. Such an electric vehicle includes a battery for supplying electric power. In particular, a battery of the battery-powered electric vehicle or a plug-in-type hybrid electric vehicle is charged with power supplied from an external power supply, and an electric motor of the battery-powered electric vehicle or the plug-in-type hybrid electric vehicle is driven with the power charged in the battery. Therefore, electric vehicles are required to be charged to be driven.

Charging an electric vehicle is performed using a charging station of the electric vehicle and a vehicular charger. The charging station supplies power to the vehicular charger. The vehicular charger transfers power to the electric vehicle. At this moment, the electric vehicle starts a preparatory operation for charging the electric vehicle. The preparatory operation may include driving a power supply unit. Here, the power supply unit is supplied with DC power from an auxiliary battery arranged in the electric vehicle and controls a level of voltage so as to supply power to a control unit and other devices required for driving an internal charging device of the electric vehicle.

The present disclosure provides a charging control device for use in an electric vehicle to control a power supply device for supplying power to a charger of the electric vehicle.

### SUMMARY

Embodiments provide a charging control device for use in an electric vehicle to control a power supply device for supplying power to a charger of the electric vehicle. In particular, the charging control device is capable of reducing the power consumption when the power supply device is not operated.

In one embodiment, a charging control device for use in an electric vehicle to control an internal charging device of the electric vehicle includes: an auxiliary battery configured to supply DC power; a power supply device configured to change a level of a voltage of the DC power to supply power; a power supply control device configured to control the supply of the DC power to the power supply device; and a power supply device control signal generation unit configured to transmit a charging start signal to the power supply control device in the case where a charging start condition is satisfied.

A turn-on signal receiving terminal of the power supply device for receiving a turn-on signal may be constantly turned on.

The case where the charging start condition is satisfied may be at least one of the case where the power supply device control signal generation unit detects the supply of an AC voltage from a vehicular charger, the case where the power supply device control signal generation unit receives a controller area network (CAN) signal, the case where the power supply device control signal generation unit detects connection to the vehicular charger, and the case where the power supply device control signal generation unit receives a pilot control signal.

The charging control device may further include a connection detection unit configured to detect the connection to the vehicular charger on the basis of a level of a voltage applied to a proximity resistor.

The connection detection unit may detect the connection to the vehicular charger when the voltage applied to the proximity resistor is lower than a reference voltage.

The power supply control device may include a switch and turn on the switch on the basis of the charging start signal.

The power supply device control signal generation unit may transmit the charging start signal to the power supply device after transmitting the charging start signal to the power supply control device.

In another embodiment, a method for operating a charging control device for use in an electric vehicle to control an internal charging device of the electric vehicle includes: generating and transmitting a charging start signal in the case where a charging start condition is satisfied; receiving the charging start signal to transfer DC power; and changing a level of a voltage of the DC power using a power supply device to supply power.

A turn-on signal receiving terminal of the power supply device for receiving a turn-on signal may be constantly turned on.

The case where the charging start condition is satisfied may be at least one of the case where a power supply device control signal generation unit detects the supply of an AC voltage from a vehicular charger, the case where the power supply device control signal generation unit receives a controller area network (CAN) signal, the case where the power supply device control signal generation unit detects connection to the vehicular charger, and the case where the power supply device control signal generation unit receives a pilot control signal.

The method may further include detecting the connection to the vehicular charger on the basis of a level of a voltage applied to a proximity resistor.

The detecting the connection to the vehicular charger may include detecting the connection to the vehicular charger when the voltage applied to the proximity resistor is lower than a reference voltage.

The receiving the charging start signal to transfer the DC power may include turning on a switch of a power supply control device for transferring the DC power on the basis of the charging start signal.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating a charging operation of an electric vehicle according to an embodiment.
Fig. 2 is a block diagram illustrating a charging control device for an electric vehicle according to an embodiment.
Fig. 3 is a flowchart illustrating an operation of a charging control device for an electric vehicle according to an embodiment.
Fig. 4 is a block diagram illustrating a charging control device for an electric vehicle according to another embodiment.
Fig. 5 is a flowchart illustrating an operation of a charging control device for an electric vehicle according to another embodiment.

### DETAILED DESCRIPTION OF THE EMBODIMENTS

Hereinafter, embodiments of the present disclosure will be described in detail with reference to the accompanying drawings so that the embodiments of the present disclosure are easily carried out by those skilled in the art. However, the embodiments may be implemented in various different forms and should not be construed as being limited to the embodiments described herein. Some parts of the embodiments are omitted in the drawings in order not to unnecessarily obscure the embodiments. Like reference numerals refer to like elements throughout the description.

When it is mentioned that a certain part "includes" or "comprises" certain elements, the part may further include other elements, unless otherwise specified.

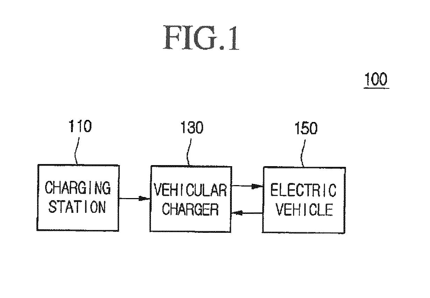

A charging control device for an electric vehicle according to an embodiment will be described with reference to Figs. 1 to 3.

Fig. 1 is a block diagram illustrating a charging operation of an electric vehicle according to an embodiment.

Referring to Fig. 1, a charging system 100 for an electric vehicle includes a charging station 110, a vehicular charger 130, and an electric vehicle 150.

The charging station 110 supplies power to the vehicular charger 130.

The vehicular charger 130 transfers power to the electric vehicle 150.

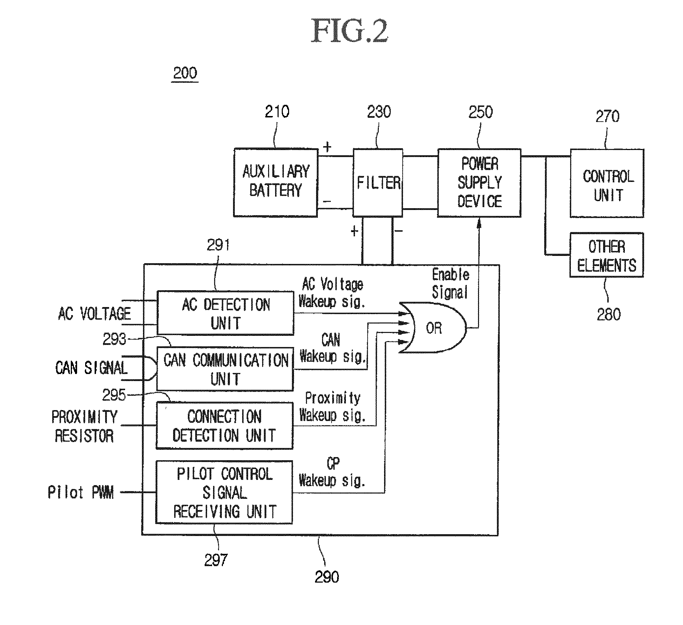

The electric vehicle 150 charges a battery in the electric vehicle 150 with the transferred power. Here, the electric vehicle 150 may drive a device such as a control unit for performing the charging. The electric vehicle 150 may supply a DC voltage of a suitable level to the device such as the control unit in order to drive the device such as the control unit. To this end, a charging control device 200 of the electric vehicle 150 controls a power supply device that regulates a level of a DC voltage supplied from an auxiliary battery in the electric vehicle 150 so as to supply the DC voltage to the device such as the control unit. Here, the auxiliary battery may be different from a battery for supplying electricity for driving the electric vehicle. The charging control device 200 will be described in detail with reference to Figs. 2 to 5.

Fig. 2 is a block diagram illustrating the charging control device for an electric vehicle according to an embodiment.

The charging control device 200 for an electric vehicle according to an embodiment includes an auxiliary battery 210, a filter 230, a power supply device 250, a control unit 270, other elements 280, and a power supply device control signal generation unit 290.

The auxiliary battery 210 stores DC power. The auxiliary battery 210 is discharged to supply the DC power to the electric vehicle 150 when the electric vehicle 150 requires the DC power. Here, the auxiliary battery 210 may be different from a battery for supplying electricity for driving the electric vehicle.

The filter 230 filters out noise of the DC power.

The power supply device 250 changes a level of a voltage of the filtered DC power so as to supply the DC power. Here, the changed level of the voltage of the DC power is a level of a DC voltage required for driving the control unit 270 and the other elements 280. Here, the power supply device 250 may be a switching mode power supply (SMPS). The power supply device 250 may receive a charging start signal through a turn-on signal input terminal so as to start to operate.

The control unit 270 controls operation of an internal charging device of the electric vehicle 150.

The other elements 280 include elements required for operating the internal charging device of the electric vehicle 150.

The power supply device control signal generation unit 290 generates a signal for controlling the power supply device 250 according to a charging start condition. The power supply device control signal generation unit 290 may include at least one of an AC detection unit 291, a controller area network (CAN) communication unit 293, a connection detection unit 295, and a pilot control signal receiving unit 297. The AC detection unit 291 detects an AC voltage supplied from the vehicular charger 130. When the AC detection unit 291 detects the supply of the AC voltage, the AC detection unit 291 inputs a control signal to a logic OR gate. Therefore, when the AC voltage is supplied from the vehicular charger 130, the power supply device control signal generation unit 290 may generate the charging start signal for turning on the power supply device 250. The CAN communication unit 293 receives a CAN signal from the vehicular charger 130. Here, the CAN is a vehicle network system for supporting digital serial communication between various instrumentation and control devices of a vehicle. The CAN signal is used for the vehicular charger 130 to control the internal charging device of the electric vehicle 150. When receiving the CAN signal, the CAN communication unit 293 inputs a control signal to the logic OR gate. Therefore, when the CAN signal is received from the vehicular charger 130, the power supply device control signal generation unit 290 may generate the charging start signal for turning on the power supply device 250. The connection detection unit 295 detects connection of the vehicular charger 130. Here, the connection detection unit 295 may detect the connection of the vehicular charger 130 using a proximity resistor. In detail, the connection detection unit 295 may detect the connection of the vehicular charger 130 on the basis of a change of a voltage applied to the proximity resistor. When the vehicular charger 130 is connected, a resistor included in the vehicular charger 130 is connected in parallel to the proximity resistor so that the combined resistance is smaller than the resistance of the proximity resistor. Therefore, the level of the voltage applied to the proximity resistor becomes smaller than that of the voltage measured before the connection of the vehicular charger 130. Therefore, when the voltage applied to the proximity resistor is lower than a reference voltage, the connection detection unit 295 may detect the connection of the vehicular charger 130. When detecting the connection of the vehicular charger 130, the connection detection unit 295 inputs a control signal to the logic OR gate. Therefore, when the connection of the vehicular charger 130 is detected, the power supply device control signal generation unit 290 may generate the charging start signal for turning on the power supply device 250. The pilot control signal receiving unit 297 receives a pilot control signal. Here, the pilot control signal is a control signal used in the electric vehicle 150 to monitor and control an internal charging process of the electric vehicle 150.

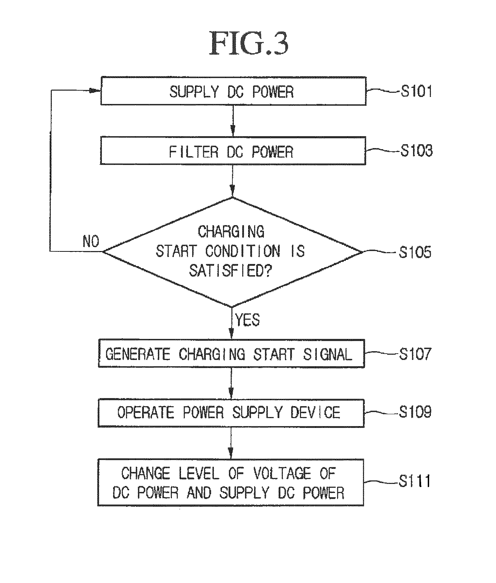

Fig. 3 is a flowchart illustrating the operation of the charging control device for an electric vehicle according to an embodiment.

The auxiliary battery 210 is discharged to supply DC power (operation S101).

The filter 230 filters out noise of the DC power (operation S103). The filter 230 may improve the efficiency of the supply of the DC power by filtering out noise of the DC power.

The power supply device control signal generation unit 290 determines whether a charging start condition is satisfied (operation S105). In detail, the power supply device control signal generation unit 290 may determine at least one of whether the supply of the AC voltage from the vehicular charger 130 is detected through the AC detection unit 291, whether the CAN signal is received through the CAN communication unit 293, whether the connection of the vehicular charger 130 is detected through the connection detection unit 295, and whether the pilot control signal is received through the pilot control signal receiving unit 297, so as to determine whether the charging start condition is satisfied.

When the charging start condition is satisfied, the power supply device control signal generation unit 290 generates and transmits the charging start signal for turning on the power supply device 250 (operation S107).

The power supply device 250 receives the charging start signal and starts to operate (operation S109). In detail, the power supply device 250 may receive the charging start signal through a turn-on signal input terminal so as to start to operate.

The power supply device 250 changes the level of the voltage of the filtered DC power so as to supply the DC power (operation S111). In detail, the power supply device 250 may change the level of the voltage of the filtered DC power into a level of a voltage required by the control unit 270 and the other elements.

Here, the power supply device 250 is supplied with the filtered DC power before being turned on. Therefore, the power supply device 250 consumes the DC power even though the power supply device 250 is in a standby state before being turned on. Therefore, power is unnecessarily consumed. Automobile manufacturers generally define a leakage current consumption standard of an internal charging device of an electric vehicle as 100 uA or lower. The power supply device 250 consumes a leakage current of about 200 uA in a standby state. A power supply device which consumes a small amount of power in a standby state is expensive. Therefore, a charging control device for minimizing the power consumption of the power supply device 250 is required.

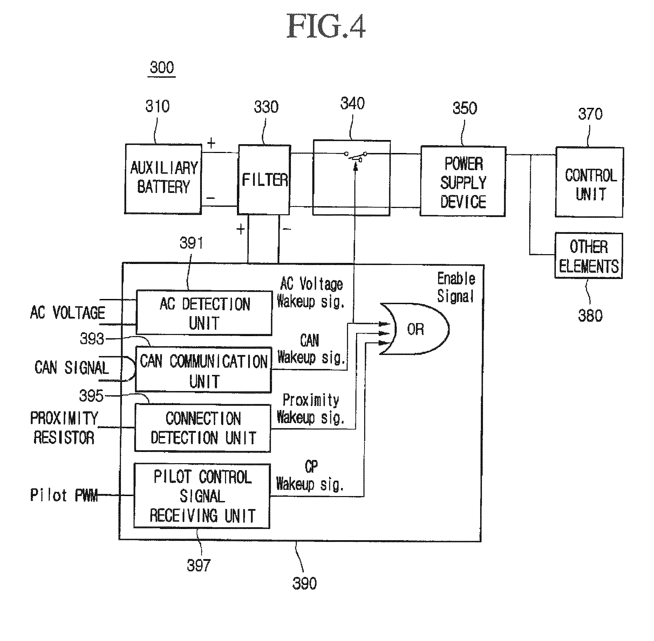

Fig. 4 is a block diagram illustrating a charging control device for an electric vehicle according to another embodiment.

A charging control device 300 for an electric vehicle according to an embodiment includes an auxiliary battery 310, a filter 330, a power supply control device 340, a power supply device 350, a control unit 370, other elements 380, and a power supply device control signal generation unit 390.

The auxiliary battery 310 stores DC power. The auxiliary battery 310 is discharged to supply the DC power to the electric vehicle 150 when the electric vehicle 150 requires the DC power. Here, the auxiliary battery 310 may be different from a battery for supplying electricity for driving the electric vehicle.

The filter 330 filters out noise of the DC power.

The power supply control device 340 controls the supply of the filtered DC power. Here, the power supply control device 340 controls the supply of the filtered DC power on the basis of a control signal generated by the power supply device control signal generation unit 390. Here, the power supply control device 340 may be a switch turned on or not according to the control signal generated by the power supply device control signal generation unit 390.

The power supply device 350 changes a level of a voltage of the filtered DC power so as to supply the DC power. Here, the changed level of the voltage of the DC power is a level of a DC voltage required for driving the control unit 370 and the other elements 380. Here, the power supply device 350 may be a switching mode power supply (SMPS). Unlike the power supply device of the embodiment of Fig. 2 or 3, the power supply device 350 may start to operate by being supplied with power without receiving an additional signal. To this end, the power supply device 350 may constantly turn on a turn-on signal input terminal. Alternatively, the power supply device 350 may receive a charging start signal through the turn-on signal input terminal so as to start to operate, as described above with reference to Figs. 2 and 3. Here, although not illustrated in Fig. 4, a signal line may exist to connect the turn-on signal input terminal of the power supply device 350 to the power supply device control signal generation unit 390.

The control unit 370 controls the operation of the internal charging device of the electric vehicle 150.

The other elements 380 include elements required for operating the internal charging device of the electric vehicle 150.

The power supply device control signal generation unit 390 generates a signal for controlling the power supply device 350 according to a charging start condition. The power supply device control signal generation unit 390 may include at least one of an AC detection unit 391, a controller area network (CAN) communication unit 393, a connection detection unit 395, and a pilot control signal receiving unit 397. The AC detection unit 391, the CAN communication unit 393, the connection detection unit 395, and the pilot control signal receiving unit 397 operate in the same manner as described above with reference to Figs. 2 and 3. However, the power supply device control signal generation unit 390 transmits the charging start signal to the power supply control device 340.

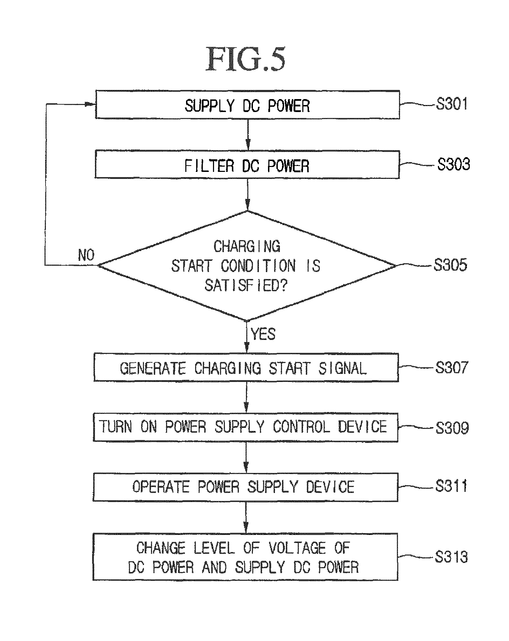

The operation of the charging control device 300 for an electric vehicle according to another embodiment will be described in detail with reference to Fig. 5.

Fig. 5 is a flowchart illustrating the operation of the charging control device for an electric vehicle according to another embodiment.

The auxiliary battery 310 is discharged to supply DC power (operation S301).

The filter 330 filters out noise of the DC power (operation S303). The filter 330 may improve the efficiency of the supply of the DC power by filtering out noise of the DC power.

The power supply device control signal generation unit 390 determines whether a charging start condition is satisfied (operation S305). In detail, the power supply device control signal generation unit 390 may determine at least one of whether the supply of the AC voltage from the vehicular charger 330 is detected through the AC detection unit 391, whether the CAN signal is received through the CAN communication unit 393, whether the connection of the vehicular charger 330 is detected through the connection detection unit 395, and whether the pilot control signal is received through the pilot control signal receiving unit 397, so as to determine whether the charging start condition is satisfied.

When the charging start condition is satisfied, the power supply device control signal generation unit 390 generates and transmits the charging start signal (operation S307).

The power supply control device 340 receives the charging start signal and transfers the filtered DC power (operation S309).

The power supply device 350 is supplied with the filtered DC power so as to start to operate (operation S311). Here, the power supply device 350 may constantly turn on the turn-on signal input terminal so as to immediately operate upon receiving the DC power. In another embodiment, the power supply device 350 may receive the charging start signal to start to operate. Here, a signal line may exist to connect the turn-on signal input terminal of the power supply device 350 to the power supply device control signal generation unit 390. In the case where the charging start signal is transferred to the power supply device 350 before being transferred to the power supply control device 340, the power supply device 350 may not start to operate. Therefore, the power supply device control signal generation unit 390 may sequentially transmit the charging start signal. In detail, the power supply device control signal generation unit 390 may transmit the charging start signal to the power supply device 350 after transmitting the charging start signal to the power supply control device 340.

The power supply device 350 changes the level of the voltage of the filtered DC power so as to supply the DC power

(operation S313). In detail, the power supply device 350 may change the level of the voltage of the filtered DC power into a level of a voltage required by the control unit 370 and the other elements.

The charging control device 300 for an electric vehicle according to an embodiment blocks the supply of power when the power supply device 350 is not operated, thereby reducing leakage power in a standby state. Furthermore, since the turn-on signal input terminal of the power supply device 350 is constantly turned on, the power supply device 350 may immediately start to operate when being supplied with power. Moreover, since the turn-on signal input terminal of the power supply device 350 is constantly turned on, the power supply device control signal generation unit 390 does not require additional timing control for sequentially transmitting the charging start signal to the power supply control device 340 and the power supply device 350.

The above-mentioned features, structures or effects are included in at least one embodiment, but are not necessarily limited to only one embodiment. Furthermore, the features, structures or effects of each embodiment may be combined or modified by those skilled in the art so as to be implemented in other embodiments. Therefore, such combination or modification should be construed as falling within the scope of the present disclosure.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A charging control device 300 for use in an electric vehicle to control an internal charging device of the electric vehicle, comprising:
an auxiliary battery 310 configured to supply DC power;
a power supply device 350 configured to change a level of a voltage of the DC power to supply power;
a power supply control device 340 configured to control the supply of the DC power to the power supply device 350; and
a power supply device control signal generation unit 390 configured to transmit a charging start signal to the power supply control device 340 in the case where a charging start condition is satisfied.

2. The charging control device 300 according to claim 1, wherein a turn-on signal receiving terminal of the power supply device 350 for receiving a turn-on signal is constantly turned on.

3. The charging control device 300 according to claim 1, wherein the case where the charging start condition is satisfied is at least one of the case where the power supply device control signal generation unit detects the supply of an AC voltage from a vehicular charger, the case where the power supply device control signal generation unit receives a controller area network (CAN) signal, the case where the power supply device control signal generation unit detects connection to the vehicular charger, and the case where the power supply device control signal generation unit receives a pilot control signal.

4. The charging control device 300 according to claim 3, further comprising a connection detection unit 395 configured to detect the connection to the vehicular charger on the basis of a level of a voltage applied to a proximity resistor.

5. The charging control device 300 according to claim 4, wherein the connection detection unit 395 detects the connection to the vehicular charger when the voltage applied to the proximity resistor is lower than a reference voltage.

6. The charging control device 300 according to claim 1, wherein the power supply control device 340 comprises a switch and turns on the switch on the basis of the charging start signal.

7. The charging control device 300 according to claim 1, wherein the power supply device control signal generation unit 390 transmits the charging start signal to the power supply device 350 after transmitting the charging start signal to the power supply control device 340.

8. A method for operating a charging control device 300 for use in an electric vehicle to control an internal charging device of the electric vehicle, comprising:
generating and transmitting a charging start signal in the case where a charging start condition is satisfied;
receiving the charging start signal to transfer DC power; and
changing a level of a voltage of the DC power using a power supply device 350 to supply power.

9. The method according to claim 8, wherein a turn-on signal receiving terminal of the power supply device 350 for receiving a turn-on signal is constantly turned on.

10. The method according to claim 8, wherein the case where the charging start condition is satisfied is at least one of the case where a power supply device control signal generation unit detects the supply of an AC voltage from a vehicular charger, the case where the power supply device control signal generation unit receives a controller area network (CAN) signal, the case where the power supply device control signal generation unit detects connection to the vehicular charger, and the case where the power supply device control signal generation unit receives a pilot control signal.

11. The method according to claim 10, further comprising detecting the connection to the vehicular charger on the basis of a level of a voltage applied to a proximity resistor.

12. The method according to claim 11, wherein the detecting the connection to the vehicular charger comprises detecting the connection to the vehicular charger when the voltage applied to the proximity resistor is lower than a reference voltage.

13. The method according to claim 8, wherein the receiving the charging start signal to transfer the DC power comprises turning on a switch of a power supply control device 340 for transferring the DC power on the basis of the charging start signal.
